# EUROPEAN PATENT APPLICATION

(11) **EP 4 757 377 A1**
(43) Date of publication of application: **10.06.2026**
(21) Application number: 24218374.7
(22) Date of filing: 09.12.2024
(51) Int. Cl.: H04W 12/75, H04L 67/12, H04W 4/46, H04L 9/40

(54) **DRIVING RENEGOTIATION METHOD AND APPARATUS FOR PROTECTING PRIVACY**

(30) Priority: 03.12.2024 KR 20240177664
(71) Applicant: Penta Security Systems, Inc., Seoul 07241 (KR)
(72) Inventor: YUN, Keon, 05825 Seoul (KR); OH, Jin Hyeok, 14247 Gwangmyeong-si, Gyeonggi-do (KR); OH, Yun Jin, 07519 Seoul (KR); KIM, Minchul, 02479 Seoul (KR); LIM, Myong Cheol, 01755 Seoul (KR); KIM, Tae Gyun, 16811 Yongin-si, Gyeonggi-do (KR)
(74) Representative: Stöckeler, Ferdinand

(57) **Abstract**

A driving renegotiation method performed by a roadside unit (RSU) may comprise: receiving a first message from a first vehicle; confirming, based on a first hash value and temporary identification (ID) value in the first message, that the first vehicle is the vehicle that negotiated with a second vehicle via the RSU in a previous session of the driving negotiation; verifying, based on the first hash value and temporary ID value in the first message, that the first message is not a tampered message; and transmitting the first message to the second vehicle.

## Description

### CROSS-REFERENCE TO RELATED APPLICATIONS

This application claims priority to Korean Patent Application No. 10-2024-0177664, filed on December 3, 2024, with the Korean Intellectual Property Office (KIPO), the entire contents of which are hereby incorporated by reference.

### BACKGROUND

### 1. Technical Field

This disclosure relates to driving negotiation technology for autonomous vehicles, and more particularly, to a driving renegotiation method and apparatus capable of protecting privacy.

### 2. Related Art

In the late 20th century, the growing need for technology enabling direct communication between vehicles, between vehicles and infrastructure, and between vehicles and people led to the development of Vehicle-to-Everything (V2X) communication and Intelligent Transport Systems (ITS). The terminology for ITS varies by country, with the United States using the term Connected Vehicle, Europe referring to it as Cooperative ITS (C-ITS), and Japan calling it ITS Spot. Cooperative ITS is also referred to as next-generation ITS. Additionally, ITS is sometimes called Car Talk System or Talking Car. In Korea, it is expressed as next-generation ITS (Cooperative ITS, hereinafter referred to as "C-ITS").

Currently, for driving negotiations between vehicles and infrastructure (Vehicle-to-Infrastructure, V2I), temporary IDs (tempIDs) are used instead of vehicle-specific identifiers (IDs) to protect vehicle privacy. Temporary IDs are reissued at regular intervals, making it impossible to identify the session from a previous driving negotiation with a newly issued ID.

A change in temporary ID, while a vehicle moves from one Roadside Unit (RSU) coverage area to another, requires the vehicle to rediscover the driving negotiation entities through broadcasting. When renegotiating driving negotiations to extend the existing agreement between vehicles and infrastructure, vehicle-specific information may be used to identify the negotiating entity, potentially compromising user privacy.

Therefore, there is a need for a solution that enables the extension (renegotiation) of driving negotiations via RSUs without compromising privacy.

### SUMMARY

This disclosure has been developed to address the limitations of the existing technology described above, and it is an object of the disclosure to provide a driving renegotiation method and apparatus capable of protecting privacy based on a new message format definition.

It is another object of the disclosure to provide a driving renegotiation method and apparatus capable of reducing the renegotiation time by utilizing hash values.

It is yet another object of the disclosure to provide a driving renegotiation method and apparatus capable of efficiently delivering vehicle-to-infrastructure-to-vehicle (V2I2V) services by extending the driving negotiation session through a logical session identifier (ID).

According to a first exemplary embodiment of the present disclosure, a driving renegotiation method performed by a roadside unit (RSU) may comprise: receiving a first message from a first vehicle; confirming, based on a first hash value and temporary identification (ID) value in the first message, that the first vehicle is the vehicle that negotiated with a second vehicle via the RSU in a previous session of the driving negotiation; verifying, based on the first hash value and temporary ID value in the first message, that the first message is not a tampered message; and transmitting the first message to the second vehicle.

The first hash value may be a hash value obtained by hashing a first vehicle ID and a message ID of the first vehicle.

The method may further comprise: receiving a second message from the second vehicle; and confirming, based on a second hash value and a temporary ID value in the second message, that the second vehicle is the vehicle that received a driving negotiation request from the first vehicle in the previous session of the driving negotiation.

The second hash value may be a hash value obtained by hashing a second vehicle ID and a message ID of the second vehicle.

The message ID of the first hash value in the first message and the message ID of the second hash value in the second message may be identical.

The first message or the second message may be a probe vehicle data (PVD) message or a basic safety message (BSM).

According to a second exemplary embodiment of the present disclosure, a driving renegotiation method performed by a first vehicle may comprise: transmitting a first message including a first hash value and a temporary identification (ID) value to a second vehicle via a roadside unit (RSU); and receiving a second message including a second hash value and a temporary ID value from the second vehicle via the RSU in response to the first message.

The first vehicle and the second vehicle may be vehicles that performed a driving negotiation with each other via the RSU in a previous session of the current driving negotiation.

The first hash value may be a hash value obtained by hashing a first vehicle ID and a message ID of the first vehicle.

The first message may be verified by the RSU as an untampered message based on the first hash value and temporary ID value in the first message.

The second hash value may be a hash value obtained by hashing a second vehicle ID and a message ID of the second vehicle.

The second message may be verified by the RSU as an untampered message based on the second hash value and temporary ID value within the second message.

The method may further comprise: transmitting another message with the first hash value, message ID, and temporary ID to the second vehicle via vehicle-to-vehicle communication; and receiving another message with the second hash value, message ID, and temporary ID from the second vehicle via vehicle-to-vehicle communication, wherein another message is a basic safety message (BSM).

According to a third exemplary embodiment of the present disclosure, a driving renegotiation apparatus including a roadside unit (RSU) may comprise: a processor configured to perform at least one program command; and a transceiver connected to the processor, wherein the processor may receive a first message from a first vehicle, confirm, based on a first hash value and temporary identification (ID) value in the first message, that the first vehicle is the vehicle that negotiated with a second vehicle via the RSU in a previous session of the driving negotiation, verify, based on the first hash value and temporary ID value in the first message, that the first message has not been tampered with; and transmit the first message to the second vehicle.

The first hash value may be a hash value obtained by hashing a first vehicle ID and a message ID of the first vehicle.

The processor may receive a second message from the second vehicle, and confirm, based on a second hash value and temporary ID value in the second message, that the second vehicle is the vehicle that received a driving negotiation request from the first vehicle in the previous session of the driving negotiation.

The second hash value may be a hash value obtained by hashing a second vehicle ID and a message ID of the second vehicle.

The message ID of the first hash value in the first message and the message ID of the second hash value in the second message may be identical.

The first message or the second message may be a probe vehicle data (PVD) message.

The processor may further transmit the first message including the first hash value, message ID, and temporary ID to the second vehicle via vehicle-to-vehicle communication, the first message being a basic safety message (BSM).

The disclosed driving renegotiation method and apparatus is advantageous in terms of effectively protecting privacy of vehicle users by performing driving renegotiation based on a new message format definition, without using personal identification information such as vehicle identifiers (IDs) in the driving renegotiation process. Particularly, the disclosed driving renegotiation method and apparatus is capable of ensuring anonymity and effectively protecting privacy by identifying vehicles without exposing vehicle identification values, using specific data frame fields (e.g., DF_rene) for driving renegotiation through the extension of the standard message set.

In addition, the disclosed driving renegotiation method and apparatus is also advantageous in terms of effectively reducing renegotiation time by using hash values in V2I2V driving renegotiations via RSUs. Particularly, the disclosed driving renegotiation method and apparatus is capable of effectively managing vehicles and shortening the negotiation process by defining identification information for the numerous messages broadcast by each vehicle, along with vehicle information, as a single message set for use in RSUs.

Furthermore, the disclosed driving renegotiation method and apparatus is advantageous in terms of effectively protecting the privacy of vehicle users without compromising the efficiency of V2I2V services by extending the driving negotiation session through a logical session identifier (ID).

### BRIEF DESCRIPTION OF DRAWINGS

FIG. 1 is a diagram illustrating the existing V2I2V driving negotiation process.
FIG. 2 is a diagram illustrating the V2I2V driving negotiation process to which the driving renegotiation method according to an embodiment of the disclosure is applied.
FIG. 3 is a diagram illustrating a new message format that can be adopted for the driving renegotiation method of this embodiment.
FIG. 4 is a diagram illustrating another new message format that can be adopted for the driving renegotiation method of this embodiment.
FIGS. 5 and 6 are diagrams illustrating the key processes of the driving renegotiation method of this embodiment.
FIG. 7 is a flowchart illustrating a driving renegotiation method according to another embodiment of the disclosure.
FIG. 8 is a schematic block diagram illustrating a driving renegotiation apparatus according to another embodiment of the disclosure.
FIG. 9 is a signal flow diagram illustrating another driving renegotiation method that can be employed in the driving renegotiation apparatus of FIG. 8.
FIG. 10 is a diagram illustrating the key operations of the driving renegotiation method according to another embodiment of the disclosure.

### DETAILED DESCRIPTION OF THE EMBODIMENTS

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one A or B" or "at least one of one or more combinations of A and B". In addition, "one or more of A and B" may refer to "one or more of A or B" or "one or more of one or more combinations of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

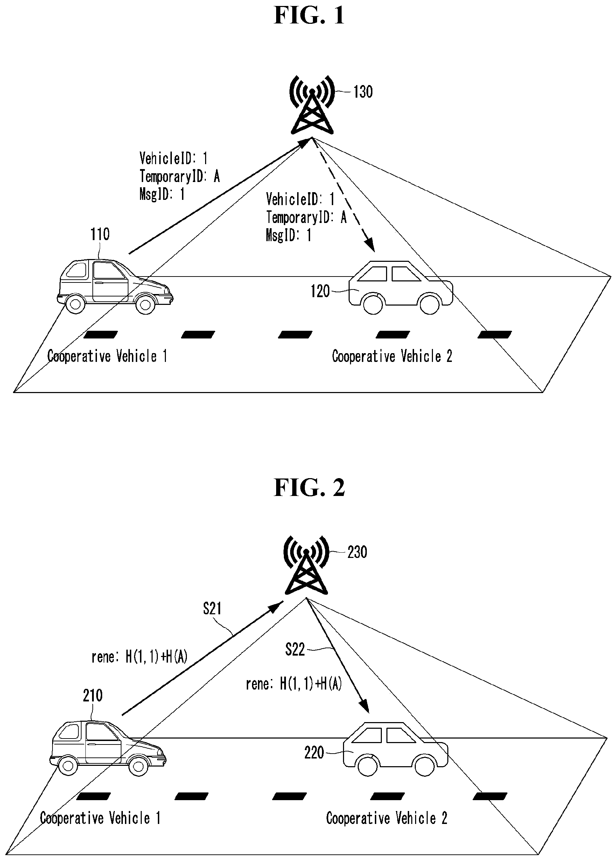

FIG. 1 is a diagram illustrating the existing V2I2V driving negotiation process.

With reference to FIG. 1, in order to conduct a vehicle-to-vehicle (V2V) driving negotiation via a roadside unit (RSU) 130, the first vehicle 110 broadcasts the identification values of the vehicle and message. Here, the first vehicle 110 broadcasts a message containing the vehicle identification value (VehicleID), temporary identification value (TemporaryID), and message identification value (MsgID). The vehicle identification value may be abbreviated as the vehicle ID, which is a unique ID. For example, the VehicleID may be 1, the TemporaryID may be A, and the MsgID may be 1. The TemporaryID is an ID temporarily created for the current session.

The driving negotiation request message broadcast from the first vehicle 110 may be transmitted to the second vehicle 120 via the RSU 130. The first vehicle 110 corresponds to the first cooperative vehicle (Cooperative Vehicle 1), and the second vehicle 120 corresponds to the second cooperative vehicle (Cooperative Vehicle 2).

In vehicle-to-infrastructure (V2I) driving negotiations, a TemporaryID is used instead of the unique vehicle identifier (VehicleID) to protect vehicle privacy. When a TemporaryID is used, it is reissued periodically, and the newly issued TemporaryID cannot be used to locate the session from a previous driving negotiation.

Additionally, when the TemporaryID is changed while the vehicle moves the coverage area of the RSU 130 to another RSU's coverage area, the vehicle must reconfirm the driving negotiation entity through message broadcasting. In this process, when renegotiating to extend the negotiating session between the vehicle and infrastructure, there is a risk of compromising user privacy due to the use of the vehicle's unique information to identify the negotiation entity.

FIG. 2 is a diagram illustrating the V2I2V driving negotiation process to which the driving renegotiation method according to an embodiment of the disclosure is applied.

With reference to FIG. 2, the first vehicle 210, which performs the driving renegotiation method of this embodiment, carries out the driving negotiation using the new message format of this embodiment, without exposing the unique vehicle ID (vehicleID) and message ID, through a hash technique.

The message set of the new message format may include a new message frame for driving renegotiation. The new message frame may be expressed as containing 'rene', but is not limited thereto, and other representations are possible.

In this embodiment, the first vehicle 210 may transmit a driving renegotiation message, expressed as 'rene:H(1,1)+H(A)', to the RSU 230 for driving renegotiation in operation S21. In operation S22, the RSU 230 may forward the driving renegotiation message from the first vehicle 210 to the second vehicle 220, which was the negotiation counterpart of the first vehicle 210 in the previous session. The RSU 230 may either directly deliver the renegotiation message to the second vehicle 220 or broadcast the message within its service area.

In the driving renegotiation message, 'H(1,1)' represents the hash value (hereinafter referred to as the first hash) obtained by converting the vehicleID of 1 and the messageID of 1 into hash values, and 'H(A)' represents the hash value (hereinafter referred to as the second hash) obtained by converting the temporaryID A into a hash value. This type of driving renegotiation message is just one example and may include a fixed-length value or data that changes each time it is generated, depending on the vehicleID, messageID, and temporaryID.

In this embodiment, the first vehicle 210 may be referred to as cooperative vehicle 1, and the second vehicle 220 may be referred to as cooperative vehicle 2.

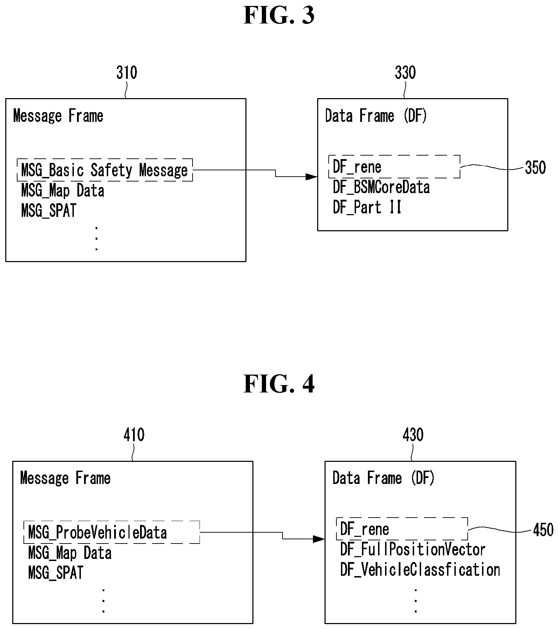

FIG. 3 is a diagram illustrating a new message format that can be adopted for the driving renegotiation method of this embodiment.

With reference to FIG. 3, the message set may include at least one message frame 310, and the message frame 310 may include at least one data frame (DF) 330. Additionally, the data frame 330 may optionally include at least one data element. The message frame 310 may include messages such as a basic safety message (BSM), map data, and a signal phase and timing (SPAT) message.

The BSM message (MSG_Basic Safety Message) is used for communication between vehicles or between vehicles and infrastructure, typically over dedicated short range communication (DSRC), and serves to exchange data collected or generated by vehicles or infrastructure. For example, a vehicle may acquire information such as the location, speed, and direction of another vehicle from the BSM message of the other vehicle. The map data message (MSG_Map Data) may include map data sent from the RSU to the vehicle. The SPAT message (MSG_SPAT) may include traffic signal information.

In more detail, the data frame 330 of the BSM message may include newly added data frame (DF_rene) 350 for driving renegotiation, a data frame (DF_BSMCoreData) for the BSM core data, and a data frame (DF_Part II) for BSM Part II.

The newly added data frame for driving renegotiation may be structured to include unique identifiers such as the vehicle ID (CarID or VehicleID), message ID (MsgID), and temporary ID (TemporaryID).

BSM core data refers to the core data included within the BSM message.

BSM Part 2 may be used to convey data regarding vehicle safety extensions and RTCM packets while a preset event is activated, in addition to the typical information about vehicle location and other data conveyed by BSM Part 1 data.

One of the technical features of the driving renegotiation method of this embodiment is the addition of the new data frame 350 for driving renegotiation to the driving negotiation message format. The new data frame 350 may be expressed as 'DF_rene', but not limited thereto, and other representations may be possible. The configuration of the new data frame 350 may be referenced with the detailed description provided with reference to FIG. 2. The new data frame 350 may be referred to as the first data frame or the renegotiation data frame.

The field values of the renegotiation data frame may be values or data obtained by applying a hash function to the vehicle's unique ID and message ID values together. For example, when the vehicle's unique ID is x and the message ID is y, the field value of the renegotiation data frame may be expressed as H(1,1). Here, H(x,y) represents the hash value when the vehicle ID is x and the message ID is y. x or y may be any value, character, symbol, or data.

Thus, the driving renegotiation method of this embodiment performs driving renegotiation using a BSM including the renegotiation data frame 350. ABSM containing this renegotiation data frame 350 may be a message used in vehicle-to-vehicle (V2V) and/or vehicle-to-infrastructure (V2I) communication.

As a reference, the cooperative autonomous driving system may operate via V2X communication with the basic safety message (BSM) shared between vehicles. Each vehicle periodically shares its information through the BSM message, and the surrounding vehicles analyze the received BSM data to assess the road driving conditions.

The aforementioned message set for BSM may be a part of the SAE (Society of Automotive Engineers) J2735 message set, which is a type of standard message set. The BSM format used in the SAE J2735 message is shown in Table 1. The BSM format includes BSM Part 1 (Part I) messages and BSM Part 2 (Part II).

**[Table 1]**

| Message | Content: Data Frame (DF) / Data Element (DE) |
|---|---|
| | DE_DSRCMsgID |
| | DE_MsgCount |
| | DE_TemporaryID |
| | DE_Dsecond or DE_time |
| | DE_Latitude |
| | DE_Longitude |
| | DE_Elevation |
| | DF_PositionAccuracy |
| | DF_TransmissionAndSpeed |
| | DE_Speed |
| | DE_TransmissionState |
| BSM Part I | DE_Heading |
| | DE_SteeringWheelAngle |
| | DF_AccelerationSet4Way |
| | DE_Acceleration (Longitudinal) |
| | DE_Acceleration (Lateral) |
| | DE_VerticalAcceleration |
| | DE_YawRate |
| | DF_BrakeSystemStatus |
| | DF_VehicleSize |
| | DE_VehicleWidth |
| | DE_VehicleLength |
| BSM Part II | DE_EventFlags |
| | DF_PathHistory |
| | DF_PathPrediction |
| | DF_RTCMPackage |

That is, the BSM may include data elements such as message ID, message count, temporary ID, time (or Dsecond), latitude, longitude, elevation, position accuracy, transmission state, speed, heading, steering wheel angle, acceleration, and vertical acceleration in Part I.

The BSM Part II message may include, in addition to the "routine" information regarding vehicle location and other data conveyed through the BSM Part I message, event flags, path history, path prediction, and RTCM (Radio Technical Commission for Maritime Services) packets.

Additionally, the BSM Part II message may transmit information related to safety "events," such as hard braking actions, through the DF_VehicleSafetyExtension data frame. This information may be used to alert the driver of the receiving vehicle about the mentioned events and/or for the receiving vehicle to perform automated actions, such as automatic braking, steering, and/or throttling, in response to these events for collision avoidance.

When the event flag data element (DE_EventFlag) is inactive, the nominal transmission rate of the BSM being broadcast may be 10 Hz, or 10 times per second. At the default message rate of 10 Hz, the BSM may be transmitted at random times within a range of 0 to 5 milliseconds, with a deviation of ± 100 milliseconds. After an initial BSM reports a safety event with an event flag data element (DE_EventFlag) set to "1", the safety event may persist for several seconds, so subsequent BSMs, which may still have the DE_EventFlag set to "1", may continue to be transmitted at the nominal rate of 10 Hz.

Safety-related events are not periodic and are generally sporadic. Broadcasting BSM periodically means that the occurrence of safety events is transmitted to other vehicles with a certain delay, which may be as much as a nominal 100 ms or an average of 50 ms in the BSM cycle. In other words, since vehicles generally transmit BSMs 10 times per second, there is a 100 ms gap between BSMs, and thus, the maximum delay between a safety event and the time it is reported in the BSM may be up to 100 ms. However, since safety events may occur at any point during the 100 ms period, they may be reported within 50 ms of their occurrence on average.

There are two factors that can increase this nominal delay time. First, congestion on the safety channel due to a high density of vehicles in the area may decrease the transmission rate of BSMs, thereby increasing the periodicity of BSM transmission. The delay caused by the increased periodicity may be two, three times, or more, for example, ranging from 100 ms to 300 ms or beyond. Second, enhanced distributed channel access (EDCA) causes a certain idle time between transmissions, ranging from tens of microseconds to several milliseconds, depending on selected parameters such as arbitration interframe space number (AIFSN), contention window minimum (CWmin), and contention window maximum (CWmax).

Typically, "normal" BSM uses the second-highest priority, i.e., EDCA parameters for user priority 4 and 5. Meanwhile, a BSM carrying a message with the "event" flag, i.e., when DE_EventFlag is set to " 1", uses the highest priority, i.e., EDCA parameters for user priority 6 and 7.

Table 2 shows the EDCA parameter set in IEEE 802.11.

**[Table 2]**

| User Priority | AC | CWmin | CWmax | AIFSN | TXOP limit |
|---|---|---|---|---|---|
| 1, 2 | AC_BK | 15 | 1023 | 9 | 0 |
| 0, 3 | AC_BE | 15 | 1023 | 4 | 0 |
| 4, 5 | AC_VI | 7 | 15 | 3 | 0 |
| 6. 7 | AC_VO | 3 | 7 | 2 | 0 |

In Table 2, AC_BK represents the background access class, AC_BE represents the best effort access class, AC_VI represents the video access Class, and AC_VO represents the voice access Class. TXOP limit refers to the transmission opportunity limit.

Additionally, Table 3 shows some EDCA parameters for both normal and event BSMs.

**[Table 3]**

| Classification | CWmin | CWmax | AIFSN |
|---|---|---|---|
| Normal BSM | 7 | 15 | 3 |
| Event BSM | 3 | 7 | 2 |

The BSM containing the renegotiation data frame of this embodiment may be applied to both normal BSMs and event BSMs.

The aforementioned standard message set is exemplified by the SAE (Society of Automotive Engineers) J2735 message set, but is not limited thereto, as the message set disclosed herein may include all message sets currently used for driving negotiations via RSUs or all message sets that may be used for driving negotiations via RSUs in the future. That is, the message set that may be adopted for the driving renegotiation method disclosed herein may include any message set that includes a data frame field with a value obtained by hashing both the vehicle's unique ID and the message ID. Additionally, the name of the data frame field is exemplified as 'DF_rene,' but not limited there to and may be appropriately modified and used depending on personal, commercial, or standardization purposes.

As seen in the BSM data elements exemplified in Table 1, the provided information is limited to basic vehicle parameters at a specific moment in time, such as speed, location, and steering angle. In other words, the BSM merely shares status information and does not include details about the vehicle's intended purpose or planned maneuvers. While such BSMs are sufficient to enable autonomous driving, knowing the other vehicle's intended movement in advance may be highly beneficial in critical situations.

In such a context, vehicles implementing the driving renegotiation method of this embodiment may be configured to support maneuver sharing and coordination messages (MSCM) for maneuver sharing and coordinating service (MSCS). MSCS is a service that enables V2X-capable vehicles to share their intended maneuvers with each other. Details of MSCS can be found in SAE J3186.

In the aforementioned case, the driving renegotiation method of this embodiment may be configured to utilize a new message format by adding a renegotiation data frame to MSCM. The new MSCM format with the added renegotiation data frame may take various forms. However, the field value of the renegotiation data frame must be a value or data obtained by applying a hash function to both the vehicle's unique ID and the message ID.

FIG. 4 is a diagram illustrating another new message format that can be adopted for the driving renegotiation method of this embodiment.

With reference to FIG. 4, the message set for driving renegotiation that can be used by vehicles or RSUs may include at least one message frame, which may include at least one data frame. Additionally, the data frame may optionally include at least one data element. The message frame 410 may include a probe vehicle data (PVD) message.

The PVD message MSG_ProbeVehicleData is used to exchange the status of a vehicle with other DSRC devices or RSUs to collect information on typical vehicle movement behavior along road sections. The reporting vehicle, which reports the status of the vehicle, may collect one or more snapshots to send to a receiving RSU along with information (vectors) about the time and location of the snapshot events. Since all sequences of snapshots are related within a limited time and spatial range, some data compression may be applied to the message to reduce redundant information.

Additionally, in the PVD message, the data generation or snapshot generation cycle may be 100 ms, and the snapshot transmission cycle may be 1 second. The transmission program may store data in files at regular intervals, such as daily, and provide the data in various data formats, including text (txt) files, through a Kafka client.

One of the features of the driving renegotiation method in this embodiment is that it is configured to include a new data frame 450 for driving renegotiation within the data frame 430 of the PVD message. The new data frame 450 may be expressed as 'DF_rene', but not limited thereto, and other representations may be possible. The configuration of the new data frame 450 may be referenced with the detailed description provided with reference to FIG. 2. Hereinafter, the new data frame 450 may be referred to as the second data frame or the renegotiation data frame.

That is, the driving renegotiation method of this embodiment is configured to perform driving renegotiation using a PVD message that includes a renegotiation data frame 450 within the data frame 430. A PVD message containing such a renegotiation data frame 450 may be used in vehicle-to-infrastructure (V2I) or vehicle-to-vehicle (V2V) communication.

The renegotiation data frame 450 may be configured to include a unique identifier such as vehicle ID (CarID or VehicleID), message ID (MsgID), and temporary ID (TemporaryID). In particular, the field value of the renegotiation data frame 450 may be a value or data obtained by applying a hash function to both the vehicle's unique ID and the message ID. For example, when the vehicle's unique ID is x and the message ID is y, the field value of the renegotiation data frame may be expressed as H(1,1). Here, H(x,y) represents the hash value when the vehicle ID is x and the message ID is y. x or y may be any value, character, symbol, or data.

Hereinafter, a description is provided of an exemplary driving renegotiation method using the aforementioned renegotiation data frame.

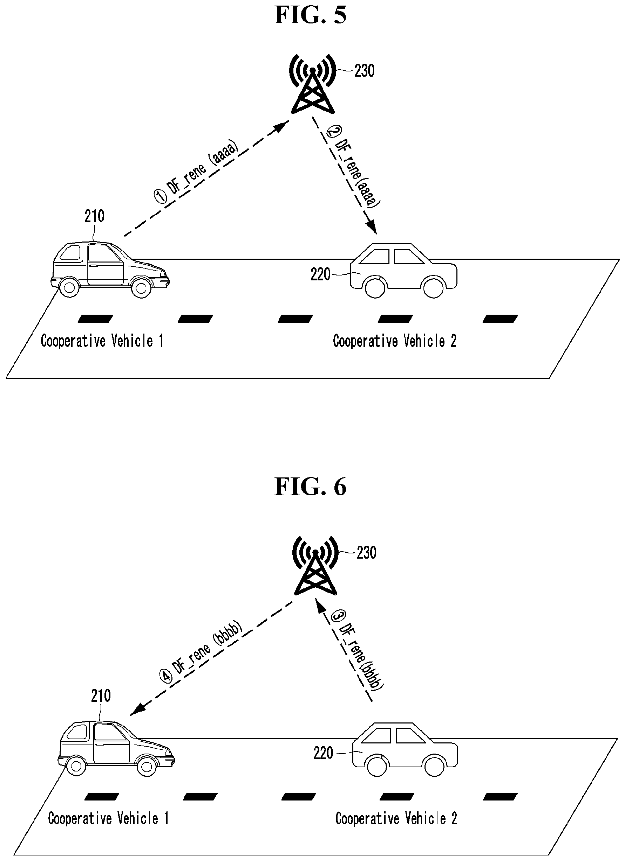

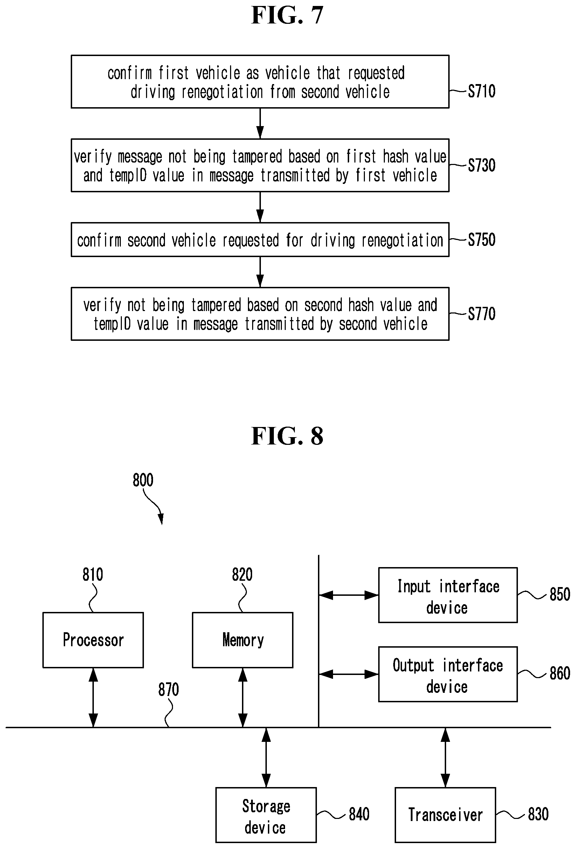

FIGS. 5 and 6 are diagrams illustrating the key processes of the driving renegotiation method of this embodiment. FIG. 7 is a flowchart illustrating a driving renegotiation method according to another embodiment of the disclosure.

In this embodiment, the first vehicle may correspond to the first cooperative vehicle (cooperative vehicle 1), and the second vehicle may correspond to the second cooperative vehicle (cooperative vehicle 2).

With reference to FIGS. 5 and 7, the RSU 230 implementing the driving renegotiation method of this embodiment may be a DSRC device that facilitates the driving negotiation between the first vehicle 210 and the second vehicle 220. Thus, since the RSU 230 knows the information regarding the previous session of the driving negotiation between the first vehicle and the second vehicle, such as their unique vehicle IDs and message IDs, upon receiving the first message containing the renegotiation data frame for driving renegotiation from the first vehicle, the RSU may confirm in operation S710 that the first vehicle is the one that requested the driving negotiation with the second vehicle. The vehicle requesting the driving renegotiation may protect its privacy by proceeding with the renegotiation without exposing its unique vehicle information.

The first message may be a BSM or PVD message containing the value aaaa, which is the hashed result of the first vehicle' s vehicle ID (first vehicle ID) and message ID, in a predetermined data frame DF_rene(aaaa). The predetermined data frame DF_rene(aaaa) is the renegotiation data frame. The hashed value of the first vehicle ID and message ID aaaa may be referred to as the first hash value.

In operation S730, the RSU 230 may verify that the first message sent by the first vehicle 210 has not been tampered with by checking the first hash value and the temporary ID TempID in the first message. Then, the RSU 230 may transmit the first message to the second vehicle 220.

Meanwhile, as shown in FIGS. 6 and 7, the RSU 230 may receive a second message from the second vehicle 220. Here, the RSU 230 may confirm in operation S750 that the vehicle sending the second message is the second vehicle 220, which received the driving negotiation, i.e., the driving renegotiation request, from the first vehicle 210.

The second message may be a BSM or PVD message containing the hashed value bbbb of the second vehicle's ID (second vehicle ID) and the message ID in a predetermined data frame (DF_rene(bbbb)). The predetermined data frame (DF_rene(bbbb)) is the renegotiation data frame. The message ID is the same as the message ID of the first message. The hashed value bbbb of the second vehicle ID and message ID may be referred to as the second hash value.

In operation S770, the RSU 230 may confirm that the second message sent by the second vehicle 220 is not tampered with, by checking the second hash value and the temporary ID (TempID) value within the second message. Then, the RSU 230 may forward the second message to the first vehicle 210.

As described above, the proposed method for driving negotiation between vehicles via an RSU facilitates the negotiation without exposing the vehicle's unique information, even during a handoff when the vehicle moves out of the RSU service area and enters a new RSU service area, or when the vehicle is turned off, requiring the driving negotiation session to be reset, thereby ensuring privacy protection.

FIG. 8 is a schematic block diagram illustrating a driving renegotiation apparatus according to another embodiment of the disclosure.

With reference to FIG. 8, the driving renegotiation apparatus 800 may include at least one processor 810. The driving renegotiation apparatus 800 may further include a memory 820 or a transceiver 830 connected to a network for communication. The at least one processor 810 and memory 820 may constitute at least one controller. The transceiver 830 may include at least one sub-communication system or wireless communication module (WCM) that supports either a wired or wireless network. Additionally, the driving renegotiation apparatus 800 may further include a storage device 840, an input interface device 850, and an output interface device 860.

The components included in the driving renegotiation apparatus 800 may communicate with each other through a bus 870. Each of the components included in the driving renegotiation apparatus 800 may be connected through individual interfaces or individual buses, rather than a common bus, centered around the processor 810. For example, the processor 810 may be connected to at least one of the memory 820, the transceiver 830, the storage device 860, the input interface device 850, and the output interface device 860 via a dedicated interface.

The processor 810 may execute program instructions stored in at least one of the memory 820 and the storage device 840. The processor 810 may refer to a central processing unit (CPU), a graphics processing unit (GPU), or a dedicated processor performing the driving renegotiation method according to an embodiment of the disclosure. The program instructions may include at least one instruction for implementing the aforementioned driving renegotiation method.

Each of the memory 820 and the storage device 840 may be configured as at least one of a volatile storage medium and a non-volatile storage medium. For example, memory 820 may be composed of at least one of read only memory (ROM) or random access memory (RAM).

The aforementioned driving renegotiation apparatus 800 may be implemented as an onboard unit (OBU), processor, or controller installed in a vehicle. Additionally, the driving renegotiation apparatus 800 may be implemented as a processor or controller installed in a roadside unit (RSU). The RSU may be connected to or installed in a base station for at least one of vehicle communication, mobile communication, wireless communication, or satellite communication.

While referred to as the driving renegotiation apparatus for convenience in this embodiment, the disclosure is not limited to this designation or expression and can also be referred to as a driving negotiation device that performs or relays the driving renegotiation.

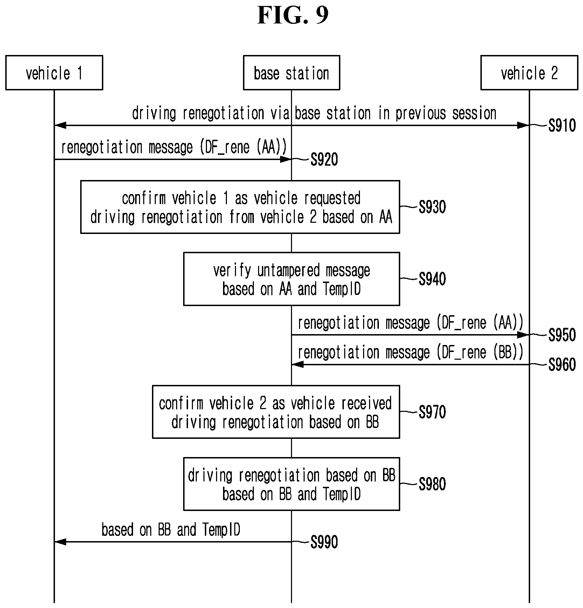

FIG. 9 is a signal flow diagram illustrating another driving renegotiation method that can be employed in the driving renegotiation apparatus of FIG. 8.

With reference to FIG. 9, the first vehicle, labeled as vehicle 1, may be one of the vehicles that performed a driving negotiation with the second vehicle, labeled as vehicle 2, via a base station in a previous session in operation S910. The base station may include a roadside unit (RSU).

In a situation where driving renegotiation is necessary, the first vehicle may send a renegotiation message to the base station in operation S920. That is, the first vehicle may send the first renegotiation message to the second vehicle through the base station in operation S920. The renegotiation message, referred to as the first renegotiation message, is a driving renegotiation message.

The first renegotiation message may be a BSM or PVD message that includes a renegotiation data frame (DF_rene(AA)) with a value (AA) obtained by hashing the vehicle ID (Vehicle 1 ID) and message ID of the first vehicle. The value (AA) obtained by hashing the first vehicle ID and message ID may be referred to as the first hash value.

In operation S930 , the base station may confirm that the first vehicle requested the driving negotiation with the second vehicle by the first vehicle's hash value (AA) and temporary ID.

In operation S940, the base station may verify that the message has not been tampered with using the first hash value (AA) and the temporary ID (TempID).

Next, in operation S950, the base station may transmit the first renegotiation message (DF_rene(AA)) to the second vehicle. That is, the second vehicle may receive the first renegotiation message (DF_rene(AA)) from the first vehicle via the base station in operation S950.

Upon receiving the first renegotiation message, the second vehicle may respond by sending a renegotiation message, i.e., the second renegotiation message, to the base station in operation S960. That is, the second vehicle may send the second renegotiation message to the first vehicle through the base station.

The second renegotiation message may be a BSM or PVD message that includes a renegotiation data frame (DF_rene(BB)) with a value (BB) obtained by hashing the vehicle ID (Vehicle 2 ID) and message ID of the second vehicle. The value (BB) obtained by hashing the second vehicle ID and message ID may be referred to as the second hash value. The message ID of the first hash value and the message ID of the second hash value may be the same.

In operation S970, the base station may confirm that the second vehicle was requested to renegotiate the driving negotiation by the first vehicle, based on the second hash value (BB) and the temporary ID.

In operation S980, the base station may verify that the second message has not been tampered with using the second hash value (BB) and the temporary ID (TempID).

Then, in operation S990, the base station may transmit the second renegotiation message (DF_rene(BB)) to the first vehicle. That is, the first vehicle may receive the second renegotiation message from the second vehicle through the base station in operation S990.

Meanwhile, the driving renegotiation method of this embodiment may be implemented to allow some messages to be routed through the RSU while facilitating vehicle-to-vehicle (V2V) message exchanges. The key operations of the driving renegotiation method through V2V message exchange are explained as follows.

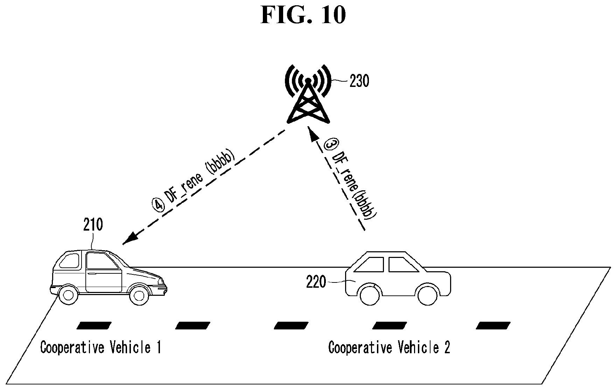

FIG. 10 is a diagram illustrating the key operations of the driving renegotiation method according to another embodiment of the disclosure.

The process of exchanging messages between the first vehicle and the second vehicle via the RSU may be referred to with reference to FIGS. 5 to 7 and 9. Thus, in this embodiment, the explanation focuses on the message exchange between the first and second vehicles.

With reference to FIG. 10, the first vehicle 210 may send the first-A renegotiation message to the second vehicle 220 via the RSU 230. The first-A renegotiation message may include a PVD message or may be included in a PVD message. The first-A renegotiation message may be a PVD message containing a specific data frame DF_rene(AA) with the hash value AA of the vehicle ID (first vehicle ID) and message ID of the first vehicle 210.

The first vehicle 210 may directly send the first-B renegotiation message to the second vehicle 220 in operation S1010. The first-B renegotiation message may include a BSM message or may be included in a BSM message. The first-B renegotiation message may be a BSM message containing a specific data frame DF_rene(AA) with the hash value AA of the vehicle ID (first vehicle ID) and message ID of the first vehicle 210.

Next, the first vehicle 210 may receive the second-A renegotiation message from the second vehicle 220 via the RSU 230. The second-A renegotiation message may be a PVD message containing a specific data frame DF_rene(BB) with the hash value BB of the vehicle ID (second vehicle ID) and message ID of the second vehicle 220.

The first vehicle 210 may directly receive the second-B renegotiation message from the second vehicle 220 in operation S1020. The second-B renegotiation message may include a BSM message or may be included in a BSM message. The second-B renegotiation message may be a BSM message containing a specific data frame DF_rene(BB) with the hash value BB of the vehicle ID (second vehicle ID) and message ID of the second vehicle 220.

The proposed driving renegotiation method in this embodiment may provide an environment where driving renegotiation is effectively carried out without exposing privacy by exchanging renegotiation messages containing renegotiation data frames through both an indirect path via the RSU and a direct path between vehicles.

In the above embodiment, the first vehicle is described as the entity that sends the first renegotiation message to the second vehicle and receives the second renegotiation message from the second vehicle, while the second vehicle is explained as the entity that receives the first renegotiation message from the first vehicle and sends the second renegotiation message to the first vehicle, but the disclosure is not limited to this configuration, and the reverse is also possible. Additionally, each vehicle performing the driving negotiation may, of course, take on the roles of both the first and second vehicle.

In the above embodiment, a vehicle or cooperative vehicle may refer to a vehicle that improves the driving environment and enhances safety and efficiency by utilizing V2V communication and V2I communication. Cooperative vehicles may include autonomous vehicles, platooning vehicles, and the like. These cooperative vehicles may be an essential component of an intelligent transportation system (ITS).

There may be one or more RSUs, which may share information with each other. The RSU may be coupled with or mounted on a base station for mobile communication.

Here, the base station refers to a point (station) that communicates with user terminals or vehicle terminals and may be referred to by various terms such as cell, NodeB, evolved NodeB (eNodeB, eNB), next-generation NodeB (gNodeB, gNB), low power node (LPN), sector, site, base transceiver station (BTS), radio base station, radio transceiver, access point, access node, relay node, radio remote head (RRH), radio unit (RU), transmission point (TP), transmission and reception point (TRP), and the like. The term "cell" may refer to various coverage areas, including mega cells, macro cells, micro cells, pico cells, femto cells, and small cells.

According to this embodiment, by defining and generating field values for a new data frame that can identify a vehicle for use in driving negotiation messages, the vehicle can be identified in the driving renegotiation process without exposing the vehicle's identification value. In particular, by using an extended message set that includes a new data frame capable of identifying the vehicle, vehicle anonymity can be ensured, and the driving renegotiation process can be shortened compared to the existing driving negotiation process including vehicle identification process.

The shortening of the driving renegotiation process addresses the issue of needing identification information for the numerous messages broadcast by the RSU, and defining the identification and vehicle information in a single message set simplifies the management and procedures of the driving negotiation.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the scope of the disclosure. Thus, it will be understood by those of ordinary skill in the art that various changes in form and details may be made without departing from the spirit and scope as defined by the following claims.

## Claims

1. A driving renegotiation method performed by a first vehicle, the method comprising:
transmitting a first message including a first hash value and a temporary identification (ID) value to a second vehicle via a roadside unit (RSU); and
receiving a second message including a second hash value and a temporary ID value from the second vehicle via the RSU in response to the first message.

2. The method of claim 1, wherein the first vehicle and the second vehicle are vehicles that performed a driving negotiation with each other via the RSU in a previous session of the current driving negotiation.

3. The method of claim 1, wherein the first hash value is a hash value obtained by hashing a first vehicle ID and a message ID of the first vehicle.

4. The method of claim 3, wherein the first message is verified by the RSU as an untampered message based on the first hash value and temporary ID value in the first message.

5. The method of claim 3, wherein the second hash value is a hash value obtained by hashing a second vehicle ID and a message ID of the second vehicle.

6. The method of claim 5, wherein the second message is verified by the RSU as an untampered message based on the second hash value and temporary ID value within the second message.

7. The method of claim 5, further comprising:
transmitting another message with the first hash value, message ID, and temporary ID to the second vehicle via vehicle-to-vehicle communication; and
receiving another message with the second hash value, message ID, and temporary ID from the second vehicle via vehicle-to-vehicle communication,
wherein another message is a basic safety message (BSM).

8. A driving renegotiation apparatus including a roadside unit (RSU), the apparatus comprising: a processor configured to perform at least one program command; and
a transceiver connected to the processor,
wherein the processor receives a first message from a first vehicle, confirms, based on a first hash value and temporary identification (ID) value in the first message, that the first vehicle is the vehicle that negotiated with a second vehicle via the RSU in a previous session of the driving negotiation, verifies, based on the first hash value and temporary ID value in the first message, that the first message has not been tampered with; and transmits the first message to the second vehicle.

9. The apparatus of claim 8, wherein the first hash value is a hash value obtained by hashing a first vehicle ID and a message ID of the first vehicle.

10. The apparatus of claim 9, wherein the processor receives a second message from the second vehicle, and confirms, based on a second hash value and temporary ID value in the second message, that the second vehicle is the vehicle that received a driving negotiation request from the first vehicle in the previous session of the driving negotiation.

11. The apparatus of claim 10, wherein the second hash value is a hash value obtained by hashing a second vehicle ID and a message ID of the second vehicle.

12. The apparatus of claim 11, wherein the message ID of the first hash value in the first message and the message ID of the second hash value in the second message are identical.

13. The apparatus of claim 8, wherein the first message or the second message is a probe vehicle data (PVD) message.

14. The apparatus of claim 8, wherein the processor further transmits the first message including the first hash value, message ID, and temporary ID to the second vehicle, the first message being a basic safety message (BSM).
